# EUROPEAN PATENT SPECIFICATION

(11) **EP 2 887 517 B1**
(45) Date of publication and mention of the grant of the patent: **05.02.2020**
(21) Application number: 13199294.3
(22) Date of filing: 23.12.2013
(51) Int. Cl.: H02M 1/12, H02M 7/487

(54) **Method for controlling a multi-phase multi-level inverter**
Verfahren zum Ansteuern eines mehrstufigen Mehrphasenwechselrichters
Procédé de commande d'un onduleur à niveaux multiples multiphase

(43) Date of publication of application: 24.06.2015
(73) Proprietor: Siemens Aktiengesellschaft, 80333 München (DE)
(72) Inventor: Carter, Robert, Knutsford, Cheshire WA16 8XU (GB)
(74) Representative: Maier, Daniel Oliver

(56) References cited:
- EP-A1- 0 642 212
- US-B1- 6 842 354

## Description

The invention relates to a method for controlling a multi-phase multi-level inverter, the inverter comprising an input circuit, a DC link in parallel to the input circuit, comprising at least two capacitances in series, and an output circuit comprising a number of multi-level output phase bridges, each one of which is connectable to a load.

In power electronics applications, pulse width modulation (PWM) inverters play a key role due to their ability of producing AC voltages of variable magnitude as well as variable frequency. PWM inverters thus are very commonly used for motor drive loads with a need for adjustable speed where the motor load is supplied with either variable voltage or variable frequency.

A PWM inverter may have a single phase or three phase output, and apart from a wide range of different inverter topologies, there are several PWM techniques with different methods of implementation. The common goal for most inverter topologies and all PWM schemes is to generate an output voltage with, possibly after some filtering step, sinusoidal voltage waveform of a desired frequency and magnitude. In many inverters, this goal is approached by dividing a sine waveform into small samples, assigning each sample a duty cycle value corresponding to for example the wave form's mean over the sample, and connecting the output circuit of the inverter to a fixed DC voltage supply, typically given by a capacitance, in either positive or negative direction of an inverter bridge according to the given duty cycle in each sample.

For a given operating frequency, deviations from a sinusoidal wave form are present as higher harmonic Fourier components, resulting in distortion. While many of the loads, for example motor wirings, have a significant inductance and in consequence offer an inherent quality to suppress high frequency harmonic currents, the problem of harmonic distortion causing compatibility and power loss remains for lower harmonics.

As one solution to generate smoother wave forms, 3-level topologies have been introduced. Their main advantage compared to the technically simpler 2-level systems is that the sine wave does not need to be resemble the duty cycles of one single voltage drop in each of its phase legs. In a 3-level topology two voltage drops, typically at two capacitances in series which are assumed to be identical, are at hand to mimic the sine wave form through switching. The overall voltage drop never goes entirely to a load, but only half of the full voltage range at each duty cycle is used. This results in a far better harmonic performance, thus compensating for the higher complexity and the intrinsically more elaborated switching control.

For a multi-phase topology, such as the most commonly used three phase inverter, a space vector is assigned to a voltage of a given magnitude and phase. This space vector is defined in a coordinate system whose basis vectors are given by the different possible switching configurations of the output phase legs of the inverter, representing electric potential differences of the different phase legs. The required voltage is then generated by decomposing its space vector into basis vectors, the decomposition coefficients representing duty cycles in a time sample of the PWM. A known key assumption is the equality of voltages over the two capacitances of the DC link, which inserts a degree of convenient redundancy into the vectorial representation of different switching states. This allows for displaying a specific space vector and thus generating a voltage via various different physical switching configurations, so that at each moment the most convenient one can be chosen.

The key assumption of equal DC link voltages at the two capacitances, however, is not correct. Even though the two voltages may be similar in many applications, they will not be identical in any. State of the art PWM schemes do not take into account this mismatch, so they assign incorrect voltage differences to certain switching states which in a generated output voltage leads to asymmetry and unwanted harmonic oscillations.

Document EP 0 642 212 A1 discloses a three-level power converter apparatus comprising means for balancing DC component thereof, wherein in order to equalize voltage shares of DC-side voltage dividing capacitors of a three-level power converting apparatus which converts a DC voltage to three-level AC phase voltage, means are provided for compensating the rising and falling instances of a three-level AC voltage pulse depending on the difference voltage of two voltage dividing capacitors and the polarity of the AC current, thereby adjusting a zero-voltage period of the AC voltage.

Document US 6,842,354 B1 discloses a capacitor charge balancing technique for a three-level PWM power converter, wherein a power converter includes a DC to AC inverter that is connected to a neutral node formed between first and second capacitors connected across two DC supply lines. The inverter is operated to selectively couple the DC supply lines and the neutral node to an output terminal thereby producing an alternative voltage waveform formed by a sequence of output pulses having positive, zero and negative voltage levels. To compensate for a voltage imbalance across the capacitors, an imbalance compensation coefficient is derived from the difference in voltages across the first and second capacitors and from the direction of current between the neutral node and the inverter. The imbalance coefficient is employed to adjust the width of the output pulses so as to charge and discharge the capacitors to correct the imbalance.

The object of the present invention is to propose a PWM scheme for controlling a multi-level inverter which reduces the asymmetry and harmonic content in a generated output voltage. Furthermore, an object of the invention is to present a multi-level inverter capable of generating an output voltage which is as smooth as possible.

According to the present invention, the first object is achieved by a method according to claim 1.

The notion of a multi-level output phase leg includes any circuit comprising at least three input links, one output link and a number of switches which by switching allows for connecting the output link to one but only one input link at a time.

Preferably, during operation the process of measuring the at least two voltages at the DC link capacitances and, based on the measurement results, calculating a switching duty cycle to generate an output voltage is repeated for a suitable plurality of time samples. In particular, the process of measuring the at least two voltages at the DC link capacitances and, based on the measurement results, calculating a switching duty cycle to generate an output voltage may be carried out in each time sample.

The basic idea behind the invention is that any scheme to reduce the output voltage asymmetry caused by a difference in the voltages at the DC link capacitances needs to observe this difference in real-time and adapt the PWM accordingly. The real- time monitoring of all the DC link voltages takes into account that during operation of the inverter, all of the DC link voltages may be subjected to unexpected changes within a short time scale, for example due to a possible backflow of power from a load connected to one output phase legs of the inverter. This real-time monitoring implies a measurement of each of the voltages at each new modulation step, i.e. for each time sample of the PWM scheme.

In order to generate an output voltage, the PWM duty cycles of the inverter's switches for connecting a respective load at one of the output phase legs to one of the at least three potential levels are then calculated in each time sample according to the measured DC link voltages.

Technically, in order to calculate the mutual electric potential differences of all of the output phases, it is sufficient to calculate difference of one phase as reference with respect to all the others.

In this sense, the measured voltages at all of the DC link capacitances which define the common voltage range provide a multi-level frame for the electric potentials of the output phases. A middle level, corresponding to the physical midpoint between two of the capacitances, is assigned the electric potential value of zero. For an output voltage of a given magnitude and phase, the electric potential differences between the individual phase legs are calculated. In case of a three phase output, this can be done by an inverse Clarke transform. A specific reference potential value is set in the range of these calculated electric potential differences of all of the output phases. The choice of this reference potential value within the potential difference range of the output phases places the range of output phase potential differences within the common voltage range while the reference potential value is taken with respect to the zero level in the common voltage range.

This choice is arbitrary, giving freedom to for example simplify the switching configurations in order to minimise switching losses, but with the only constraint that the choice of the reference potential level in the output phase potentials enables to place the full output phase potential range within the frame of the DC links common voltage range. Placing the output phases into the multi-level frame of the common voltage range according to their potential differences assigns a virtual position in the common voltage range to each of the phase legs. Finally, this position is used to calculate a duty cycle of switching and/or connection times of the respective output phase leg.

Because calculations feature real physical phase voltages it is simplified to add corrections to these when needed, for example as part of a closed loop output voltage correction scheme. Also, it is possible to accommodate voltage modifications such as compound braking.

In other words, the virtual position of an output phase's electric potential within the common voltage range is either equal to a DC link potential level or lies between two DC link potential levels. In the first case, one may directly clamp the corresponding output phase leg to the DC link potential level. In the latter case, one may calculate this position as a fraction of the two adjacent DC link potential levels. This means that in order to reach such a position in a PWM scheme, the virtual position of an output phase understood as such a fraction defines the duty cycle for the output phase leg's time connected to the next higher DC link voltage, while the remaining time of the time sample, the output phase leg is connected to the next lower potential level. As an additional benefit, unwanted state transitions between switching states can be suppressed, since each output PWM can be independently generated.

It is of advantage when for a time sample, the electric reference potential for potential differences of the phases is established by setting the highest electric potential of a phase equal to the highest DC link potential level or by setting the lowest electric potential of a phase equal to the lowest DC link potential level. By this, one of the output phase legs is permanently connected to one of the two DC link voltage levels and in this output phase leg, no switching is required during the entire time sample. This helps to reduce switching losses.

Alternatively, it can be of advantage when for a time sample, the electric reference potential for potential differences of the phases is established by setting one of the potentials of a phase equal to the zero potential defined by the midpoint between two of the DC link capacitances. Likewise, one of the output phase legs is permanently connected to midpoint between two of the DC link capacitances and in this output phase leg, no switching is required during the entire time sample. Again, switching losses may be reduced by this measure.

According to the present invention, the further object is achieved by a multi-level inverter, comprising: an input circuit, a DC link in parallel to the input circuit comprising of at least two capacitances in series establishing at least three electric potential levels, an output circuit comprising of a plurality of multi-level output phase legs connected in parallel to the DC link, each one of which comprising a plurality of switches, a number of diodes and a connection to the midpoint between two of the DC link capacitances, and connectable to a load such that the load by switching is connected during operation to either of the at least three DC link potential levels, and a control unit designed to execute the aforementioned method. The advantages mentioned for the method and its further developments can be transferred to the inverter accordingly.

In a preferred embodiment of the inverter, the number of multi-level output phase legs is three. This allows for a usage of the inverter for a three phase load, as such loads are widespread especially in motor drive technology where each phase corresponds to a single coil wiring. The challenges surrounding the operation of three phase motor drives regarding harmonic behavior can be met particularly well by employing the presented inverter.

It is particularly customary if the number of DC link capacitances is two, and each of the output phase legs is comprised of a diode clamped 3-level phase leg comprising of four switches in series, a flyback diode in anti parallel to each one of the switches, and a diode bridge of at least two diodes in series bridging the inner two switches, wherein the connection point of each output phase leg to the midpoint of the DC link capacitances is between two diodes of the diode bridge and the link to an output phase is at the midpoint of the four switches. The presented method for a PWM scheme is of great advantage in control of a diode clamped 3-level topology, notwithstanding this shall by no means imply a restriction of the method's practical application possibilities.

In yet another advantageous implementation of the inverter, the input circuit comprises a three phase AC mains connection and a rectifier bridge with three rectifier phase legs in parallel, each one of which having at its midpoint the connection to one AC mains phase leg. The usage of a three phase mains system as AC input circuit makes the inverter especially versatile due to the almost ubiquitous distribution of this mains system, to which the inverter then just may be plugged in.

The attributes and properties as well as the advantages of the invention which have been described above are now illustrated with help of a drawing of an exemplary embodiment, where
- FIG 1: shows a diode clamped 3-level inverter with three output phase legs and a control unit set up to execute the presented method,
- FIG 2: shows a space vector model for the switching configurations in a state of the art PWM scheme,
- FIG 3: shows a space vector model for the switching configurations in a PWM scheme according to the presented method,
- FIG 4: shows for the inverter of FIG 1 a diagram of output phase electric potentials placed in a common voltage range given by the DC link voltages in order to calculate duty cycles, and
- FIG 5: shows for the inverter of FIG 1 another diagram of output phase electric potentials placed in a common voltage range in a different way as in FIG 4.

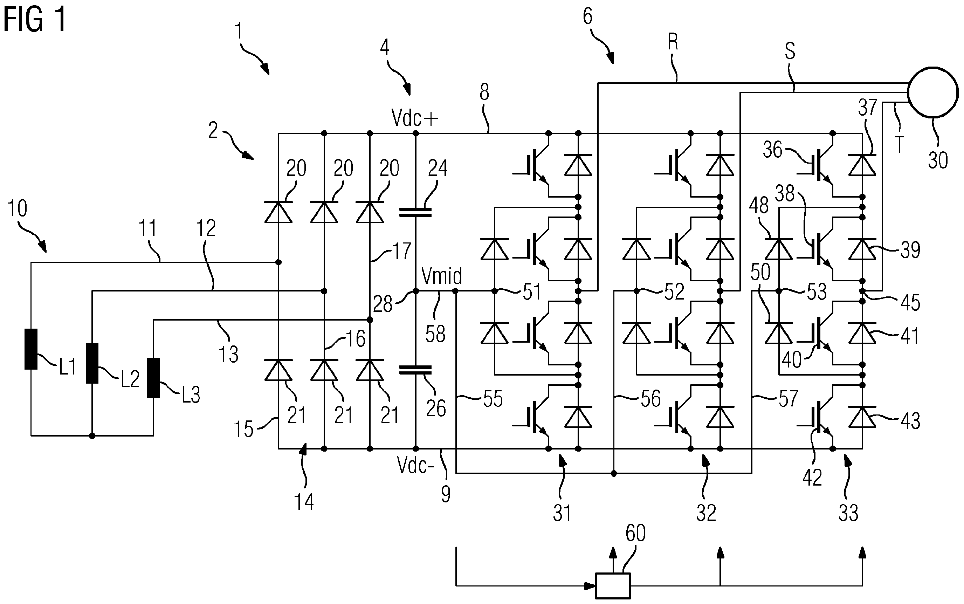

In FIG 1, an inverter 1 is shown. The inverter comprises an input circuit 2, a DC link 4 and an output circuit 6, all of which are connected in parallel through wires 8 and 9.

The input circuit 2 is connected to an AC mains power supply 10 via three connections 11, 12, 13, where each one of the connections is connected to one of the three phase legs L1, L2, L3 of the AC power supply 10. The input circuit 2 further comprises a rectifier bridge 14 with three rectifier phase legs 15, 16, 17 in parallel. Each one of the connections 11, 12, 13 is connected to o9ne op the parallel rectifier phase legs 15, 16, 17 of the rectifier bridge 14. Each rectifier phase leg 15, 16, 17 shows two diodes 20, 21 in series such that the connection point of each of the connections 11, 12, 13 to the corresponding rectifier phase leg 15, 16, 17 lies between the two diodes 20, 21.

The DC link 4 features two capacitances 24, 26. Thus, at the DC link, there are three electrical potential levels, given by Vdc+ at wire 8, Vmid at the midpoint 28 of capacitances 24 and 26 and Vdc- at wire 9.

The output circuit 6 is connected to a three phase load 30 via three phase legs 31, 32, 33, which in turn are in parallel to the DC link 4 and the rectifier bridge 14 of the input circuit 2 via wires 8 and 9. The phase legs 31, 32, 33 are equal in their respective topology, so only phase leg 33 is described in detail. It comprises four semiconductor switches 36, 38, 40, 42, to each one of which is clamped a flyback diode 37, 39, 41, 43 in anti-parallel. The midpoint 45 between the four switches 36, 38, 40, 42 is connected to the load 30. The two inner switches 38, 40 are bridged by two diodes 48, 50 in series, while the midpoints 51, 52, 53 of the diode bridges of the three phase legs 31, 32, 33 are connected together through wires 55, 56, 57 and to the midpoint 28 of the DC link 4 via link 58.

The output phase leg 31 is connected to a phase R of load 30, the output phase leg 32 is connected to a phase S of load 30, and the output phase leg 33 is connected to a phase T of load 30.

The inverter further comprises a control unit 60 set up to execute the presented method via measuring the voltages at the two capacitances 24 and 26 and sending control signals to all switches 36, 38, 40, 42 (and unlabelled ones) of the output circuit 6.

If the two "upper" switches 36 and 38 are closed while the two "lower" switches 40 and 42 remain open, the connection to the load 30 via the phase leg's 33 midpoint 45 to the DC link 4 goes over wire 8 and thus is set to the potential Vdc+. This switching state of an individual output phase leg shall be labeled as switching state 1.

If the two "inner" switches 38 and 40 are closed while the two "outer" switches 36 and 42 remain open, the connection to the load 30 via the phase leg's 33 midpoint 45 to the DC link 4 goes over the midpoint 53 of the diodes 48, 50, over wire 57 and the link 58 to the midpoint 28 of the DC link. Thus a connection to the load 30 is set to the potential Vmid. This switching state shall be labeled as switching state 0.

If now the two "upper" switches 36 and 38 remain open while the two "lower" switches 40 and 42 are closed, the connection to the load 30 to the DC link 4 goes over wire 9 and thus is set to the potential Vdc-. This switching state shall be labeled as switching state -1.

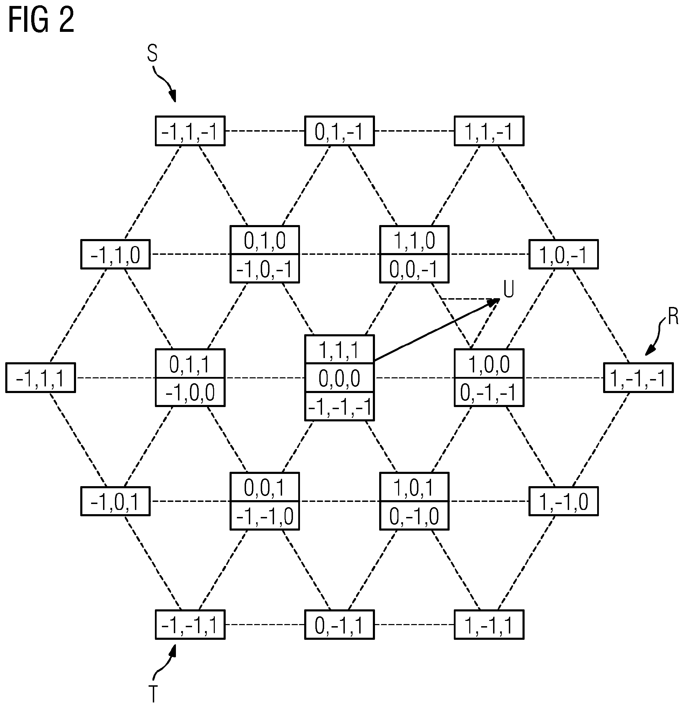

In FIG 2 a space vector model for the switching configurations in a state of the art PWM scheme for the three phases R, S, T of a load not shown in the figure is displayed. In order to generate an instantaneous voltage U with a given magnitude and phase, the voltage is represented as a space vector where the basis coordinate vectors are given by the fundamental switching states [1,0,0], [0,1,0], and [0,0,1]. In each triplet the first number denotes the switching state of phase R, the second number denotes the switching state of phase S and the third number denotes the switching state of phase T, and the length of the basis vectors is given by one of the voltages at a DC link capacitances.

A movement in the diagram along the direction of one basis vector means to change a current switching state by elevating the electrical potential of the phase corresponding to the basis vector's direction with respect to the two other phases by one DC link capacitance voltage unit. Since according to state of the art, the two voltages at the DC link capacitances are assumed to be equal, this can also be achieved by lowering the switching state of the other two phases.

The duty cycles and switching times for generating the voltage U are then calculated with help of the decomposition of its space vector in the diagram into convenient switching states, for example [1,0-1], and either of the pairs [1,1,0] and [1,0,0] or [0,0,-1] and [0,-1,-1].

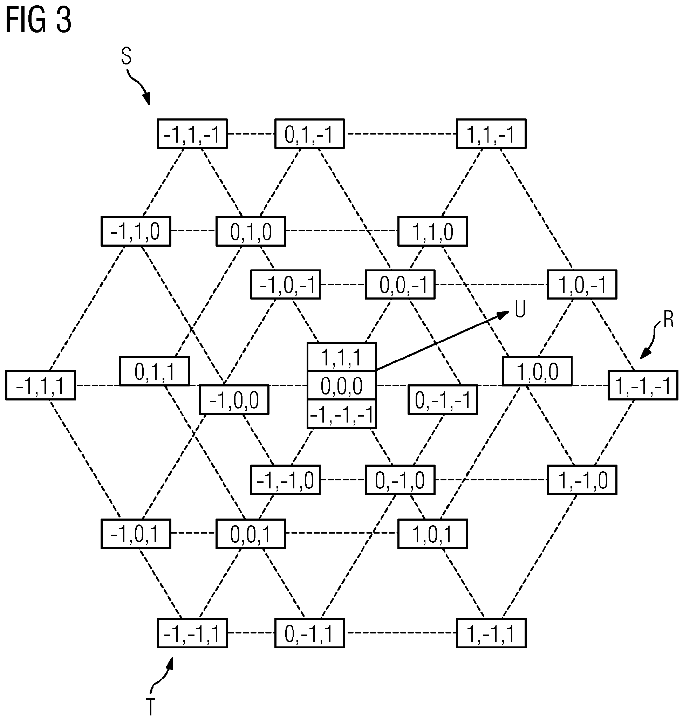

As mentioned, the key assumption for state of the art PWM that the voltage Vpos = Vdc+ - Vmid at the DC link capacitance 24 in FIG 1 and the voltage Vneg = Vmid - Vneg at the DC link capacitance 26 in FIG 1 is equal is not true. Deviations from equality may deform the diagram. Such a possible deformation of the space vector diagram is shown in FIG 3. Here, a space vector model for a 3-level inverter with Vpos = 1.5 Vneg is shown. By comparing FIG 2 and FIG 3, it is clear that if Vpos is not equal to Vneg, the equivalence of the switching state pairs at the inner hexagon, for example of [1,0,0] and [0,-1,-1], is no longer true.

State of the art PWM schemes with the implicit assumption of this equivalence may lead to a wrong decomposition of the space vector of U and thus, the calculated switching times may not reproduce the right voltage in a given time sample, leading to harmonic distortion.

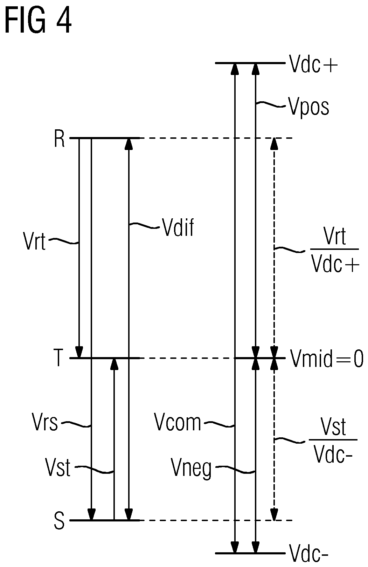

FIG 4 shows a diagram of output phase electric potentials placed in a common voltage range given by the DC link voltages Vdc+, Vcd- in order to calculate the respective duty cycles. In this example, an instantaneous voltage U of 112 V peak to phase neutral with a phase angle of 25° shall be generated, while the measured voltage Vpos at capacitance 24 in the current time sample is assumed to be 150V and measured voltage Vneg at capacitance 26 in the current time sample is assumed to be 100V.

One can calculate that in order to generate the voltage U, the potential difference Vrs between phases R and S is about 193.2V, the potential difference Vrt between R and T about 111.3V and the potential difference Vst between S and T about -81.9V.So the overall voltage range Vdif of the potential differences is the 193.2V difference between phase R and phase S, while the electric potential of phase T lies between the other two phases' potentials.

The common voltage range Vcom is given by the total difference in electric potential at the DC link, i.e. by Vdc+ - Vdc-, which gives a value of 250V, while the potential of the positive DC bus link is set to be +150 and the potential at the negative DC bus link is set to be -100V, assigning the midpoint of the DC link the potential level of zero. By clamping the output phase leg connected to phase T to the midpoint of the DC link capacitances, one sets phase T to zero, such that the placing of phase R and phase S have to be adjusted accordingly. This means that phase R is assigned the potential level of Vrt = 111.3V, and phase S is assigned the potential level of Vst = -81.9V. This means that, as Vrt is equal to 74.2% of Vpos, the output phase leg connected to phase R has a duty cycle of 74.2% of the time sample clamped to the positive DC bus link at Vdc+, and the rest of the time sample clamped to the midpoint. Likewise, as Vst is equal to 81.9% of Vneg, the output phase leg connected to phase S has a duty cycle of 81.9% of the time sample clamped to the negative DC bus link at Vdc-, and the rest of the time sample it is clamped to the midpoint.

With the given duty cycles, the required output voltage U of 112V at a phase angle of 25° will be generated.

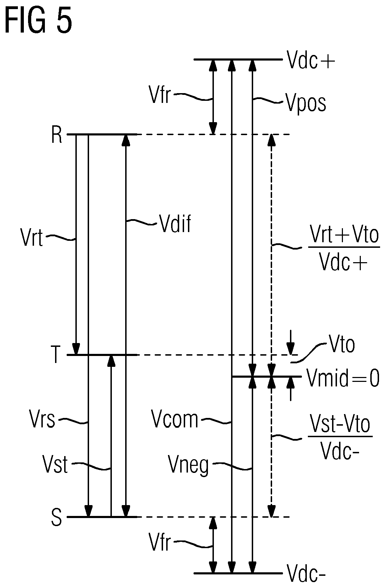

FIG 5 shows another possibility to place the electric potential differences Vrt, Vst, Vrs of the output phases R, S, T in the common voltage range Vcom. Here, overall voltage range Vdif = 193.2V of the potential differences is located symmetrically in the common voltage range Vcom = 250V. The the frame voltage Vfr is therefore equal at both ends of the common voltage range Vcom. This frame voltage can be calculated as Vfr = (Vcom - Vdif)/2 = 28.4V, and represents the difference between the positive DC link potential level Vdc+ and the virtual position of the electric potential of phase R, or the difference between the virtual position of the electric potential of phase S and the negative DC link potential level Vdc-, respectively. Due to this shift of the overall voltage difference Vdif with respect to its position within the common voltage range Vcom in FIG 4, the electric potential of phase T is no longer equal to the zero potential of the common voltage range given by the midpoint DC link potential Vmid. Instead, it is now located at a value of Vt0 = Vpos - Vrt - Vfr = 10.3V.

This means that the duty cycle of phase T is Vt0/Vdc+ = 6.9% clamped to the positive DC bus link at Vdc+, and the rest of the time sample clamped to the midpoint. Likewise, as the virtual position of the electric potential of phase R with respect to Vmid can be given as Vrt + Vt0 = 121.6V, the duty cycle of phase R is (Vrt + Vt0)/Vdc+ = 81.1% clamped to the positive DC bus link at Vdc+, and the rest of the time sample clamped to the midpoint. The duty cycle of phase S can be calculated accordingly, resulting in 71.6% clamped to the negative DC bus link at Vdc-, and the rest of the time sample clamped to the midpoint.

Even though the invention has been illustrated and described in detail with help of a preferred embodiment example, the invention is not restricted by this example. Other variations can be derived by a person skilled in the art without leaving the extent of protection of this invention.

## Claims

1. Method for controlling a multi-level inverter (1) using a pulse width modulation scheme which comprises a sampling time,
the inverter (1) comprising
an input circuit (2),
a DC link (4) in parallel to the input circuit (2) comprising at least two capacitances (24, 26) in series establishing at least three electric potential levels (Vdc+, Vmid, Vcd-), and
an output circuit (6) comprising of a plurality of multi-level output phase legs (31, 32, 33) connected in parallel to the DC link (4), each one of which comprising a plurality of switches (36, 38, 40, 42), a number of diodes (37, 39, 41, 43, 48, 50) and a connection (55, 56, 57, 58) to the midpoint (28) between two of the DC link capacitances (24, 26), and connectable to a load (30) such that the load (30) by switching is connected during operation to any of the at least three DC link potential levels (Vdc+, Vmid, Vcd-), wherein for a time sample of the pulse width modulation scheme each of the at least two voltages (Vpos, Vneg) across the two DC link capacitances (24, 26) is measured and for each of the output phases (R, S, T) a switching duty cycle based on the measured voltages (Vpos, Vneg) is calculated to generate an output voltage (U), **characterized in that** for an instantaneous output voltage (U) with a given phase angle, mutual electric potential differences (Vrs, Vrt, Vst) of the output phases (R, S, T) are calculated, a common voltage range (Vcom) between the higher DC potential level (Vdc+) and the lower DC potential level (Vdc-) is defined, wherein a zero potential (Vmid) is assigned to the midpoint (28) between the two DC link capacitances (24, 26), the two connection lines (8, 9) of the DC link (4) with the input circuit (2) and the output circuit (6) being assigned a positive (Vdc+) and a negative potential level (Vdc-), respectively, the calculated electric potential differences (Vdif) of the output phases (R, S, T) are placed in the common voltage range (Vcom) to establish the positions of the electric potentials of the respective output phases (R, S, T) within the common voltage range (Vcom), and the duty cycle is calculated for each output phase (R, S, T) based on the position of the electric potential of the respective output phase (R, S, T) within the common voltage range (Vcom), wherein
for each output phase (R, S, T), the duty cycle given by the ratio of time connected to a next higher potential level (Vdc+ or Vmid, 28) of the DC link (4) versus time connected to next lower potential level (28, Vmid or Vdc-) of the DC link (4) is taken to be the ratio established by the position of the electric potential of the corresponding phase (R, S, T) within the two respective adjacent potential levels (Vdc+, Vmid or Vmid, Vdc-) of the DC link (4).

2. The method of one of the preceding claims, wherein
for a time sample, the electric reference potential for potential differences of the phases (Vrs, Vrt, Vst) is established by setting the highest electric potential of a phase (R) equal to the highest DC link potential level (Vdc+) or by setting the lowest electric potential of a phase (S) equal to the lowest DC link potential level (Vdc-).

3. The method of claim 1, wherein
for a time sample, the electric reference potential for potential differences of the phases (Vrt, Vrs, Vst) is established by setting one of the potentials of a phase (T) equal to the zero potential defined by the midpoint (28) between two of the DC link capacitances (24, 26).

4. A 3-level inverter (1), comprising:
an input circuit (2),
a DC link (4) in parallel to the input circuit (2) comprising of at least two capacitances (24, 26) in series establishing at least three electric potential levels (Vdc+, Vmid, Vcd-),
an output circuit (6) comprising of a plurality of multi-level output phase legs (31, 32, 33) connected in parallel to the DC link (4), each one of which comprising a plurality of switches (36, 38, 40 ,42), a number of diodes (37, 39, 41, 43, 48, 50) and a connection (55, 56, 57, 58) to the midpoint (28) between two of the DC link capacitances (24, 26), and connectable to a load (30) such that the load (30) by switching is connected during operation to any of the at least three DC link potential levels (Vdc+, Vmid, Vcd-),
and a control unit (60) designed to execute the method according to claim 1.

5. The inverter (1) of claim 4, wherein
the number of 3-level output phase legs (31, 32, 33) is three.

6. The inverter (1) of claim 4 or 5, wherein
the number of the DC link capacitances (24, 26) is two, and each of the output phase legs (31, 32, 33) is comprised of a diode clamped 3-level phase leg comprising of four switches (36, 38, 40, 42) in series, a flyback diode (37, 39, 41, 43) in antiparallel to each one of the switches (36, 38, 40, 42), and a diode bridge of at least two diodes (48, 50) in series bridging the inner two switches (38, 40), wherein the connection point (51, 52, 53) of each output phase leg (31, 32, 33) to the midpoint (28) of the two DC link capacitances (24, 26) is located between two diodes (48, 50) of the diode bridge, and the link to an output phase (R, S, T) is located at the midpoint (45) of the four switches (36, 38, 40, 42) .

7. The inverter (1) of claim 4, 5 or 6, wherein
the input circuit (2) comprises a three phase AC mains connection (11, 12, 13) and a rectifier bridge (14) with three rectifier phase legs (15, 16, 17) in parallel, each one of which having at its midpoint the connection (11, 12, 13) to one AC mains phase leg (L1, L2, L3).

## Patentansprüche

1. Verfahren zum Ansteuern eines mehrstufigen Wechselrichters (1), das ein Impulsbreitenmodulationsschema verwendet, das eine Abtastzeit umfasst,
wobei der Wechselrichter Folgendes umfasst:
eine Eingangsschaltung (2),
einen Gleichstromzwischenkreis (4) parallel zu der Eingangsschaltung (2), umfassend wenigstens zwei Kapazitäten (24, 26) in Reihe, die wenigstens drei elektrische Potenzialpegel (Vdc+, Vmid, Vcd-) schaffen, und
eine Ausgangsschaltung (6), umfassend eine Mehrzahl von mehrstufigen Ausgangsphasenzweigen (31, 32, 33), die parallel mit dem Gleichstromzwischenkreis (4) verbunden sind, von denen jeder eine Mehrzahl von Schaltern (36, 38, 40, 42), eine Anzahl von Dioden (37, 39, 41, 43, 48, 50) und eine Verbindung (55, 56, 57, 58) zu dem Mittelpunkt (28) zwischen zwei der Gleichstromzwischenkreiskapazitäten (24, 26) umfasst und derart mit einer Last (30) verbindbar ist, dass die Last (30) durch Schalten während des Betriebs mit irgendeinem der wenigstens drei Gleichstromwischenkreis-Potenzialpegel (Vdc+, Vmid, Vcd-) verbunden wird,
wobei für eine Zeitprobe des Impulsbreitenmodulationsschemas jede der wenigstens zwei Spannungen (Vpos, Vneg) über den beiden Gleichsstromzwischenkreiskapazitäten (24, 26) gemessen wird und für jede der Ausgangsphasen (R, S, T) ein auf den gemessenen Spannungen (Vpos, Vneg) basierender Schaltbetriebszyklus berechnet wird, um eine Ausgangsspannung (U) zu erzeugen,
**dadurch gekennzeichnet, dass** für eine momentane Ausgangsspannung (U) mit einem gegebenen Phasenwinkel gegenseitige elektrische Potenzialdifferenzen (Vrs, Vrt, Vst) der Ausgangsphasen (R, S, T) berechnet werden, ein üblicher Spannungsbereich (Vcom) zwischen dem höheren Gleichstrom-Potenzialpegel (Vdc+) und dem niedrigeren Gleichstrom-Potenzialpegel (Vdc-) definiert wird, wobei dem Mittelpunkt (28) zwischen den beiden Gleichstromzwischenkreiskapazitäten (24, 26) ein Nullpotenzial (Vmid) zugewiesen wird, wobei die beiden Verbindungsleitungen (8, 9) des Gleichstromzwischenkreises (4) mit der Eingangsschaltung (2) und der Ausgangsschaltung (6) ein positiver (Vdc+) bzw. ein negativer Potenzialpegel (Vdc-) zugewiesen wird, wobei die berechneten elektrischen Potenzialdifferenzen (Vdif) der Ausgangsphasen (R, S, T) in den üblichen Spannungsbereich (Vcom) platziert werden, um die Positionen der elektrischen Potenziale der jeweiligen Ausgangsphasen (R, S, T) innerhalb des üblichen Spannungsbereichs (Vcom) festzulegen, und der Betriebszyklus für jede Ausgangsphase (R, S, T) basierend auf der Position des elektrischen Potenzials der jeweiligen Ausgangsphase (R, S, T) innerhalb des üblichen Spannungsbereichs (Vcom) berechnet wird, wobei
der Betriebszyklus für jede Ausgangsphase (R, S, T) durch das Verhältnis der Zeit des Verbundenseins mit einem nächsthöheren Potenzialpegel (Vdc+ oder Vmid, 28) des Gleichstromzwischenkreises (4) zu der Zeit des Verbundenseins mit dem nächstniedrigeren Potenzialpegel (28, Vmid oder Vdc-) des Gleichstromzwischenkreises (4) als das durch die Position des elektrischen Potenzials der entsprechenden Phase (R, S, T) innerhalb der beiden jeweiligen benachbarten Potenzialpegel (Vdc+, Vmid oder Vmid, Vdc-) des Gleichstromzwischenkreises (4) genommen wird.

2. Verfahren nach einem der vorhergehenden Ansprüche, wobei für eine Zeitprobe das elektrische Referenzpotenzial für Potenzialdifferenzen der Phasen (Vrs, Vrt, Vst) geschaffen wird durch Einstellen des höchsten elektrischen Potenzials einer Phase (R) gleich dem höchsten Gleichstromwischenkreis-Potenzialpegel (Vdc+) oder durch Einstellen des niedrigsten elektrischen Potenzials einer Phase (S) gleich dem niedrigsten Gleichstromwischenkreis-Potenzialpegel (Vdc-).

3. Verfahren nach Anspruch 1, wobei
für eine Zeitprobe das elektrische Referenzpotenzial für Potenzialdifferenzen der Phasen (Vrs, Vrt, Vst) geschaffen wird durch Einstellen eines der Potenziale einer Phase (T) gleich dem durch den Mittelpunkt (28) zwischen zwei der Gleichsstromzwischenkreiskapazitäten (24, 26) definierten Nullpotenzial.

4. 3-stufiger Wechselrichter (1), der Folgendes umfasst:
eine Eingangsschaltung (2),
einen Gleichstromzwischenkreis (4) parallel zu der Eingangsschaltung (2), umfassend wenigstens zwei Kapazitäten (24, 26) in Reihe, die wenigstens drei elektrische Potenzialpegel (Vdc+, Vmid, Vcd-) schaffen, eine Ausgangsschaltung (6), umfassend eine Mehrzahl von mehrstufigen Ausgangsphasenzweigen (31, 32, 33), die parallel mit dem Gleichstromzwischenkreis (4) verbunden sind, von denen jeder eine Mehrzahl von Schaltern (36, 38, 40, 42), eine Anzahl von Dioden (37, 39, 41, 43, 48, 50) und eine Verbindung (55, 56, 57, 58) zu dem Mittelpunkt (28) zwischen zwei der Gleichstromzwischenkreiskapazitäten (24, 26) umfasst und derart mit einer Last (30) verbindbar ist, dass die Last (30) durch Schalten während des Betriebs mit irgendeinem der wenigstens drei Gleichstromwischenkreis-Potenzialpegel (Vdc+, Vmid, Vcd-) verbunden wird,
und eine Steuereinheit (60), die dazu ausgebildet ist, das Verfahren nach Anspruch 1 auszuführen.

5. Wechselrichter (1) nach Anspruch 4,
wobei die Anzahl der 3-stufigen Ausgangsphasenzweige (31, 32, 33) drei ist.

6. Wechselrichter (1) nach Anspruch 4 oder 5, wobei die Anzahl der der Gleichstromzwischenkreiskapazitäten (24, 26) zwei ist und jeder der Ausgangsphasenzweige (31, 32, 33) aus einem 3-stufigen Diodenklemmen-Phasenzweig besteht, der vier in Reihe angeordnete Schalter (36, 38, 40, 42), eine antiparallel zu jedem der Schalter (36, 38, 40, 42) geschaltete Freilaufdiode (37, 39, 41, 43) und eine Diodenbrücke von wenigstens zwei in Reihe angeordneten Dioden (48, 50), die die inneren beiden Schalter (38, 40) überbrücken, umfasst, wobei der Verbindungspunkt (51, 52, 53) jedes Ausgangsphasenzweigs (31, 32, 33) zu dem Mittelpunkt (28) der beiden Gleichsstromzwischenkreiskapazitäten (24, 26) zwischen den beiden Dioden (48, 50) der Diodenbrücke liegt und der Link zu einer Ausgangsphase (R, S, T) an dem Mittelpunkt (45) der vier Schalter (36, 38, 40, 42) liegt.

7. Wechselrichter (1) nach Anspruch 4, 5 oder 6, wobei die Eingangsschaltung (2) eine dreiphasige Verbindung (11, 12, 13) zum Wechselstromnetz und eine Gleichrichterbrücke (14) mit drei parallel geschalteten Gleichrichter-Phasenzweigen (15, 16, 17) umfasst, von denen jeder an seinem Mittelpunkt die Verbindung (11, 12, 13) zu einem Wechselstromnetz-Phasenzweig (L1, L2, L3) hat.

## Revendications

1. Procédé de commande d'un onduleur multiniveau (1) utilisant un système de modulation en largeur d'impulsion qui comprend un temps d'échantillonnage,
l'onduleur (1) comprenant :
un circuit d'entrée (2) ;
une liaison à courant continu (DC) (4) montée en parallèle avec le circuit d'entrée (2) et constituée d'au moins deux capacitances (24, 26) en série établissant au moins trois niveaux de potentiel électrique (Vdc+, Vmid, Vcd-), et
un circuit de sortie (6) constitué d'une pluralité de branches (31, 32, 33) de phase de sortie multiniveau montées en parallèle avec la liaison DC (4), chacune de celles-ci comprenant une pluralité de commutateurs (36, 38, 40, 42), un certain nombre de diodes (37, 39, 41, 43, 48, 50) et une connexion (55, 56, 57, 58) avec le point central (28) entre deux des capacitances (24, 26) de la liaison DC, et connectables à une charge (30) de telle sorte que la charge (30) soit, par commutation, connectée en service à l'un quelconque des au moins trois niveaux de potentiel (Vdc+, Vmid, Vcd-) de la liaison DC, étant entendu que, pendant un échantillon de temps du système de modulation en largeur d'impulsion, on mesure chacune des au moins deux tensions (Vpos, Vneg) aux bornes des deux capacitances (24, 26) de la liaison DC et que, pour chacune des phases de sortie (R, S, T), on calcule un rapport cyclique de commutation basé sur les tensions mesurées (Vpos, Vneg) pour produire une tension de sortie (U), **caractérisé en ce que**, pour une tension de sortie (U) instantanée ayant un angle de phase donné, on calcule des différences mutuelles (Vrs, Vrt, Vst) de potentiel électrique des phases de sortie (R, S, T), on définit une gamme de tension commune (Vcom) entre le niveau supérieur (Vdc+) du potentiel DC et le niveau inférieur (Vdc-) du potentiel DC, étant entendu que l'on assigne un potentiel nul (Vmid) au point central (28) entre les deux capacitances (24, 26) de la liaison DC, les deux lignes (8, 9) connectant la liaison DC (4) au circuit d'entrée (2) et au circuit de sortie (6) étant affectées, respectivement, d'un niveau de potentiel positif (Vdc+) et d'un niveau de potentiel négatif (Vdc-), que les différences calculées (Vdif) de potentiel électrique des phases de sortie (R, S, T) sont placées dans la plage de tension commune (Vcom) pour établir les positions des potentiels électriques des phases de sortie (R, S, T) respectives dans la plage de tension commune (Vcom), et que l'on calcule le rapport cyclique pour chaque phase de sortie (R, S, T) en se basant sur la position du potentiel électrique de la phase de sortie (R, S, T) respective dans la plage de tension commune (Vcom), étant entendu que
pour chaque phase de sortie (R, S, T), on prend le rapport cyclique donné par le rapport entre le temps connecté au niveau suivant de potentiel plus élevé (Vdc+ ou Vmid, 28) de la liaison DC (4) et le temps connecté au niveau suivant de potentiel plus bas (28, Vmid ou Vdc-) pour être le rapport établi par la position du potentiel électrique de la phase correspondante (R, S, T) à l'intérieur des deux niveaux de potentiel adjacents respectifs (Vdc+, Vmid ou Vmid, Vdc-) de la liaison DC (4) .

2. Procédé selon l'une des revendications précédentes, étant entendu que, pour un échantillon de temps, on établit le potentiel électrique de référence pour les différences de potentiel des phases (Vrs, Vrt, Vst) en définissant le potentiel électrique le plus élevé d'une phase (R) comme étant égal au niveau de potentiel le plus élevé (Vdc+) de la liaison DC ou en définissant le potentiel électrique le plus bas d'une phase (S) comme étant égal au niveau de potentiel le plus bas (Vdc-) de la liaison DC.

3. Procédé selon la revendication 1, étant entendu que : pour un échantillon de temps, on établit le potentiel électrique de référence pour les différences de potentiel des phases (Vrt, Vrs, Vst) en définissant l'un des potentiels d'une phase (T) comme étant égal au potentiel nul défini par le point central (28) entre deux des capacitances (24, 26) de la liaison DC.

4. Onduleur (1) à trois niveaux, comprenant :
un circuit d'entrée (2) ;
une liaison à courant continu (DC) (4) montée en parallèle avec le circuit d'entrée (2) et constituée d'au moins deux capacitances (24, 26) en série établissant au moins trois niveaux de potentiel électrique (Vdc+, Vmid, Vcd-), et
un circuit de sortie (6) constitué d'une pluralité de branches (31, 32, 33) de phase de sortie multiniveau montées en parallèle avec la liaison DC (4), chacune de celles-ci comprenant une pluralité de commutateurs (36, 38, 40, 42), un certain nombre de diodes (37, 39, 41, 43, 48, 50) et une connexion (55, 56, 57, 58) avec le point central (28) entre deux des capacitances (24, 26) de la liaison DC, et connectables à une charge (30) de telle sorte que la charge (30) soit, par commutation, connectée en service à l'un quelconque des au moins trois niveaux de potentiel (Vdc+, Vmid, Vcd-) de la liaison DC, et une unité de commande (60) conçue pour exécuter le procédé selon la revendication 1.

5. Onduleur (1) selon la revendication 4, étant entendu que :
le nombre de branches (31, 32, 33) de phases de sortie à trois niveaux est de trois.

6. Onduleur (1) selon la revendication 4 ou 5, étant entendu que :
le nombre des capacitances (24, 26) de la liaison DC est de deux et que chacune des branches (31, 32, 33) de phase de sortie se compose d'une branche de phase à trois niveaux clampée par diode, constituée de quatre commutateurs (36, 38, 40, 42) en série, d'une diode de roue libre (37, 39, 41, 43) montée tête-bêche par rapport à chacun des commutateurs (36, 38, 40, 42) et d'un pont de diodes comportant au moins deux diodes (48, 50) en série pontant les deux commutateurs (38, 40) intérieurs, étant entendu que le point de connexion (51, 52, 53) de chaque branche (31, 32, 33) de phase de sortie avec le point central (28) des deux capacitances (24, 26) de la liaison DC est situé entre deux diodes (48, 50) du pont de diodes, et que la liaison à une phase de sortie (R, S, T) est située au point central (45) des quatre commutateurs (36, 38, 40, 42).

7. Onduleur (1) selon la revendication 4, 5 ou 6, étant entendu que :
le circuit d'entrée (2) comprend une connexion (11, 12, 13) au secteur à courant alternatif (AC) triphasé et un redresseur en pont (14) à trois branches (15, 16, 17) de phase de redresseur montées en parallèle, chacune de celles-ci comportant en son point central la connexion (11, 12, 13) avec une branche (L1, L2, L3) de phase du secteur AC.
